# EUROPEAN PATENT SPECIFICATION

(11) **EP 1 800 538 B1**
(45) Date of publication and mention of the grant of the patent: **26.11.2008**
(21) Application number: 06256555.1
(22) Date of filing: 22.12.2006
(51) Int. Cl.: A01K 97/02

(54) **Swimfeeder**
Vorrichtung zum Ausbringen von Köder in Wasser
Appareillage pour mettre à l' eau d' appât

(30) Priority: 22.12.2005 GB 0526092
(43) Date of publication of application: 27.06.2007
(73) Proprietor: Drennan International Limited, Oxford, OX4 2EX (GB)
(72) Inventor: Drennan, Peter John, Cuddesdon Oxon OX44 9HG (GB)
(74) Representative: Blood, Marlon

(56) References cited:
- GB-A- 2 186 171
- GB-A- 2 251 776
- GB-A- 2 283 157
- GB-A- 2 418 338
- US-A- 2 713 744
- US-A- 6 079 145

## Description

The present invention relates to fishing-tackle, and in particular to swimfeeders.

A swimfeeder is a device that, in use, is attached to a fishing line near to the hook, and which holds bait for attracting fish to the hook. A variety of types of bait may be used with a swimfeeder, including particulate bait such as maggots, seeds etc, and ground bait.

A known type of swimfeeder is disclosed in UK patent application GB2283157 (Drennan International Limited), and comprises a perforated generally cylindrical body that is closed at one end and open at the opposite end to allow the swimfeeder to be loaded with bait. A cap for closing the open end is connected to the cylindrical body by means of a hinge. In order to attach the swimfeeder to a fishing line, a flexible boom attached to the closed end extends through the cylindrical body and through a hole in the cap. The swimfeeder includes a weight mounted on the sidewall of the cylindrical body, or alternatively attached to the closed end, so that once the swimfeeder has been cast it rests on the bed of the river or lake.

UK patent application GB 2251776 discloses a swimfeeder comprising a hollow generally cylindrical body with a closed end and an opposite open end. A hinged end-cap closes the open end of the hollow body, and is held in the closed position by a pivoted collar. When the swimfeeder is cast, it rests on the bed of the river or lake in an orientation such that a weight located on the sidewall of the cylindrical hollow body is lowermost. This orientation ensures that a paddle part of the collar contacts the bed of the river or lake and releases the end cap to open the hollow body (to release the bait) only when the swimfeeder is pulled a short distance along the bed. The end-cap includes a weight to ensure that it pivots open when released by the collar.

In order to attract fish to a particular location in the water, it is important that a swimfeeder should be cast as accurately as possible. It is also important that a swimfeeder should lie on its side in a low profile orientation (rather than an upright orientation) on the bed of the river or lake. This helps to keep the swimfeeder and the line close to the bed so that the fish are not scared away by the line (or by the swimfeeder itself), and also helps to keep the swimfeeder more stable against currents that might otherwise move it out of position.

Accordingly, a first aspect of the present invention provides a swimfeeder comprising an elongate body for holding bait, and an attachment device for attaching the swimfeeder to a line, the body having a longitudinal axis and including an end weight located substantially at a first longitudinal end of the body, and a side weight located spaced apart from the longitudinal axis, wherein the attachment device is located substantially at the opposite longitudinal end of the body to the end weight, and wherein the end weight has a greater mass than the side weight.

By "elongate body" is meant that that the body of the swimfeeder has a greater length than width. The term "weight" is used in its normal meaning, i.e. generally as an item (or a collection of items) used for the purpose of providing weight (mass) to the swimfeeder.

The swimfeeder according to the invention has the advantage that because it has an end weight that is heavier (has a greater mass) than the side weight, it can be cast accurately when attached to a line by the attachment device, because the relatively heavy end weight will cause the swimfeeder to travel through the air in a stable manner with the first longitudinal end of the body forwardmost and with the line trailing from it. The swimfeeder will also tend to travel through the water to the bottom of the lake or river in a stable manner with the first longitudinal end of the body forwardmost, for the same reason. This is combined with a further advantage of the swimfeeder in that because it has a side weight that is spaced apart from the longitudinal axis, once the swimfeeder reaches the bottom, normally in an approximately upright orientation with its first longitudinal end lowest, it is unstable in such an upright orientation and will fall over onto its side, with the side weight lowermost. As mentioned above, this provides the advantages that it helps to keep the swimfeeder and the line close to the bottom so that the fish are not scared away by the line (or by the swimfeeder itself), and also helps to keep the swimfeeder more stable against currents that might otherwise move it out of position. The fact that the end weight is heavier than the side weight means that these advantages of the side weight can be provided without adversely affecting the advantage provided by the end weight, i.e. without detrimentally affecting the ability of the swimfeeder to be cast with accuracy.

In some embodiments of the invention, the end weight and the side weight may be joined together; however, it is generally preferred for the end weight and the side weight to be separate, distinct, weights. Also, while it is generally preferred for each weight to be formed from a single piece, it is possible in at least some versions of the invention for one or both weights to comprise a plurality of pieces, which collectively function as a single piece.

It has been found that swimfeeders according to the invention in which the ratio between the masses of the end weight and the side weight (respectively) is approximately 2:1 can perform particularly well. However, it has also been found that, for example, swimfeeders with such ratios of between approximately 1.2:1 and approximately 9:1 can also perform well. Non-limiting examples of some suitable ratios of the mass of the end weight and the mass of the side weight include: 1.2:1; 1.5:1; 2:1; 2.5:1; 4:1; 6:1; and 9:1.

The centre of mass of the side weight preferably is spaced (in a direction parallel to the longitudinal axis of the elongate body) from the end weight. The greater the separation along the body between the end weight and the centre of mass of the side weight, then the greater will be the ability of the side weight to ensure that the swimfeeder lies on its side at the bottom of the water. However, if there is a very large separation between the end weight and the centre of mass of the side weight, then the advantage provided by the end weight (to casting accuracy) may be somewhat diminished. Consequently, in preferred embodiments of the invention the position of the centre of mass of the side weight is a compromise between these two competing requirements. Preferably, the centre of mass of the side weight is situated no more than 50% of the length of the swimfeeder body from the end weight, and more preferably it is no more than 40% of the length of the swimfeeder body from the end weight. In some preferred embodiments, the side weight may be shaped such that its centre of mass is closer to the end weight than is the centre point of the length of the side weight along the length of the elongate body of the swimfeeder (i.e. in a direction parallel to the longitudinal axis of the elongate body).

The elongate body of the swimfeeder preferably comprises a hollow body suitable for holding bait within it. Preferably the hollow body is provided with a plurality of holes communicating between the interior and the exterior of the body, to allow bait contained in the body to escape once the swimfeeder has been cast into the water (thereby to attract fish to the swimfeeder). The hollow body may generally be formed in any elongate shape, but some convenient shapes include substantially cylindrical, substantially conical, substantially frusto-conical, or combinations thereof. Preferably the exterior surface of the body has a generally smooth shape, so that it can travel through the air (and the water) smoothly. Consequently, the exterior surface of the body preferably is convexly curved, especially at the longitudinal ends thereof. The end weight and the side weight each form part of the elongate body of the swimfeeder, and thus preferably they present generally smooth exterior shapes, which preferably effectively form continuations of the remainder of the exterior of the elongate body. The side weight preferably is located in a recess provided in the exterior surface of the remainder of the elongate body. The side weight may be attached to the remainder of the elongate body by any suitable means, for example by adhesive and/or by a mechanical attachment (especially by one or more pegs of the side weight or the body secured in one or more holes in the body or the side weight, respectively).

The hollow elongate body preferably includes an open end (through which bait may be loaded into the swimfeeder) and a cap to close the open end. In some especially preferred versions of the invention, the end weight is the cap of the elongate body (i.e. preferably substantially the entire cap is the end weight).

Consequently, a second aspect of the present invention provides a swimfeeder comprising an elongate hollow body for holding bait, and an attachment device for attaching the swimfeeder to a line, the hollow body having a longitudinal axis and including an end weight located substantially at a first longitudinal end of the body, and a side weight located spaced apart from the longitudinal axis, wherein the attachment device is located substantially at the opposite longitudinal end of the body to the end weight, and wherein the end weight is a cap that closes an opening in the first longitudinal end of the body.

It is to be understood that any feature of the first aspect of the invention may be a feature of the second aspect of the invention, and vice versa.

The cap preferably includes one or more holes communicating between the interior and the exterior of the body, to allow bait contained in the body to escape once the swimfeeder has been cast into the water, and to aid a quick and smooth retrieval of the swimfeeder from the water by allowing water to flow through the swimfeeder and out of the cap. The cap may be secured to the remainder of the body of the swimfeeder in any convenient manner; for example it may be hinged and/or it may be an interference-fit or snap-fit with the remainder of the body. Preferably, however, the cap is secured to the remainder of the body of the swimfeeder by means of a resiliently extendible part, which preferably is formed from elastomeric material, e.g. a polyurethane polymer. The resiliently extendible part preferably is a flexible cord or filament (that may, for example, be termed a "boom"). One end of the resilient part may be attached to the longitudinal end of the body at which the attachment part for the fishing line is located. In some preferred versions, the attachment part is attached to the resilient part, e.g. via a swivel mechanism that allows the attachment part to rotate with respect to the elongate body. The resilient part may extend through the interior of the body along its length such that the opposite end of the resilient part is attached to the cap. The arrangement preferably is such that the resilient part is under tension when the cap closes the opening in the body. Consequently, the resilience of the resilient part preferably keeps the opening closed by the cap until the cap is pulled away from the opening (by the fisherman) by a force sufficient to overcome the resilience of the resilient part. The tension by which the cap is held in place may be increased or decreased as required, by twisting or untwisting the resilient part. It will be appreciated that in preferred versions in which the attachment part for the fishing line is attached to the resilient part, the casting forces act to hold the cap in place.

The cap preferably is arranged to fit into the opening in the body of the swimfeeder, such that the sidewall of the body sits against a recess in the periphery of the cap. (However, other arrangements are, of course, possible.) The cap preferably includes an aperture into which the resilient part extends. The aperture may include a recess in an exterior surface of the cap, which recess accommodates a knot tied in the resilient part (or another protrusion on the resilient part) by which the resilient part is secured to the cap. The recess advantageously prevents the resilient part being damaged (or even sheared) by abrasions etc., in use. Preferably a knot tied in the resilient part is a snug fit in the recess, to prevent the knot from unravelling.

Normally, the end weight and/or the side weight will be formed from a material having a greater density than the material(s) from which the remainder of the elongate body of the swimfeeder is formed. For example, one or both weights may be formed from a metal or a metal alloy (e.g. an aluminium alloy). The remainder of the elongate body preferably is formed from polymeric material.

A preferred embodiment of the invention will now be described, by way of example, with reference to the accompanying drawings, of which:
Figure 1 (views (a) and (b)) shows the main components of the embodiment of the swimfeeder;
Figure 2 (views (a), (b) and (c)) shows the end weight of the embodiment of the swimfeeder; and
Figure 3 (views (a) and (b)) shows the side weight of the embodiment of the swimfeeder.

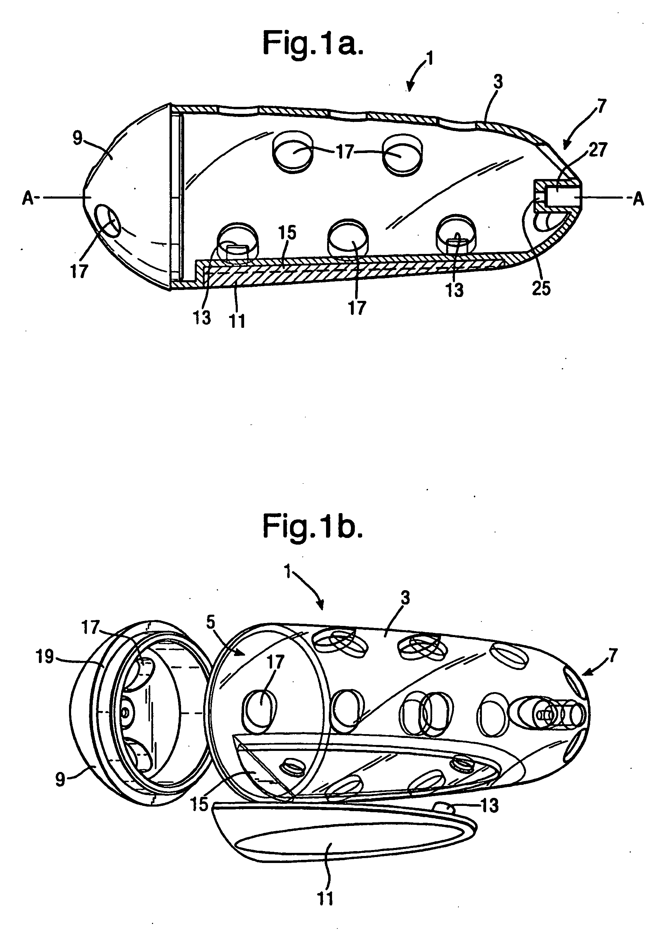

Figure 1 shows a preferred embodiment of a swimfeeder 1 according to the invention. Figure 1 shows, in partial cross-section, the main components assembled together (but without a resilient part that in practice forms part of the swimfeeder, and which is described below). The swimfeeder 1 comprises an elongate hollow body 3 for holding bait, the body having a longitudinal axis A-A and being in generally cylindrical form (more strictly, in tapered cylindrical, or frusto-conical, form) with an open end 5 and a closed convex end 7. The open end 5 of the elongate body 3 is closed in use by a cap 9 which is also an end weight of the swimfeeder. A side weight 11 is attached by pegs 13 to the exterior surface of the remainder of the elongate body 3 in a recess 15, and thus the side weight is located spaced apart from the longitudinal axis A-A. Both the end weight cap 9 and the remainder of the elongate hollow body 3 include a plurality of holes 17 communicating between the interior and the exterior of the body, to allow bait contained in the body in use to escape once the swimfeeder has been cast into the water.

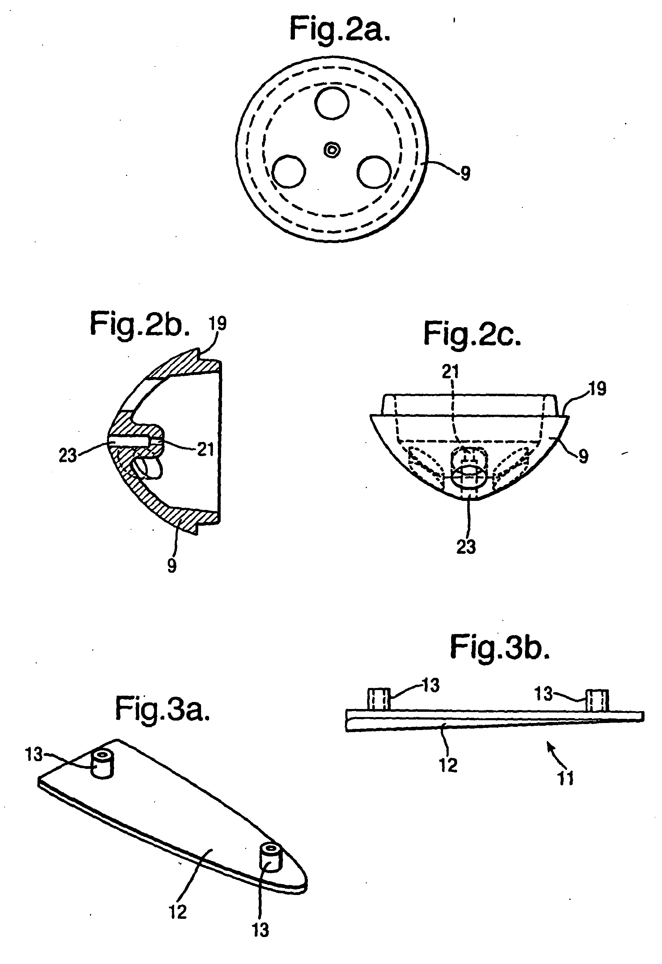

As mentioned above, in practice (but not illustrated) a resilient part in the form of an elastomeric cord or filament extends along the longitudinal axis A-A between the end cap 9 and the closed opposite end 7, to secure the cap to the open end 5 of the elongate body 3. The cap 9 is arranged to fit into the opening 5 in the body of the swimfeeder, such that the sidewall of the body sits against a recess 19 in the periphery of the cap. (However, other arrangements are, of course, possible.) As illustrated in Figure 2, the cap 9 includes an aperture 21 into which the resilient part extends. The aperture 21 includes a recess 23 in an exterior surface of the cap 9, which recess accommodates a knot tied in the resilient part (or another protrusion on the resilient part) by which the resilient part is secured to the cap. The recess 23 advantageously prevents the resilient part being damaged (or even sheared) by abrasions etc., in use. Preferably a knot tied in the resilient part is a snug fit in the recess, to prevent the knot from unravelling.

The resilient part extends to an aperture 25 in the closed end of the elongate hollow body 3, and an attachment part in the form of a swivel (not illustrated) for attaching the swimfeeder to a fishing line is attached to the resilient part and sits in a recess 27 in the exterior of the closed end 7, the recess 27 communicating with the aperture 25. The arrangement is such that the resilient part is under tension when the cap 9 closes the opening 5 in the body. Consequently, the resilience of the resilient part keeps the opening 5 closed by the cap 9 until the cap is pulled away from the opening (by the fisherman) by a force sufficient to overcome the resilience of the resilient part. The tension by which the cap 9 is held in place may be increased or decreased as required, by twisting or untwisting the resilient part. It will be appreciated that because the attachment part for the fishing line is attached to the resilient part, the casting forces act to hold the cap 9 in place.

As mentioned above, the entire cap 9 constitutes an end weight of the swimfeeder. The end weight 9 has a greater mass than the side weight 11; for example, the end weight may be approximately twice the mass of the side weight. As explained above, this has the advantage that the swimfeeder 1 can be cast accurately when attached to a line by the attachment device, because the relatively heavy end weight will cause the swimfeeder to travel through the air in a stable manner with the end weight cap 9 of the body 3 forwardmost, and with the line trailing from the rear of the swimfeeder. This is combined with a further advantage of the swimfeeder 1 in that because it has a side weight 11 that is spaced apart from the longitudinal axis A-A, once the swimfeeder reaches the bottom, normally in an approximately upright orientation with the end cap weight 9 lowest, it is unstable in such an upright orientation and will fall over onto its side, with the side weight lowermost. (This is advantageous because it helps to keep the swimfeeder 1 and the fishing line close to the bottom so that the fish are not scared away, and also helps to keep the swimfeeder more stable against currents that might otherwise move it out of position.) The fact that the end weight is heavier than the side weight means that these advantages of the side weight are provided without adversely affecting the advantage provided by the end weight, i.e. without detrimentally affecting the ability of the swimfeeder to be cast with accuracy.

The side weight 11 is shown in Figure 3. It comprises an elongate part 12 and pegs 13 projecting therefrom, for attaching the side weight to the elongate body 3 in the recess 15. The centre of mass of the side weight is situated no more than about 50% of the length of the swimfeeder body from the end weight, in a direction parallel to the longitudinal axis A-A. The side weight 11 is shaped such that its centre of mass is closer to the end weight than is the centre point of the length of the side weight along the length of the elongate body of the swimfeeder.

## Claims

1. A swimfeeder (1) comprising an elongate body (3) for holding bait, and an attachment device for attaching the swimfeeder to a line, the body (3) having a longitudinal axis (A-A) and including an end weight (11) located substantially at a first longitudinal(5) end of the body, and a side weight located spaced apart from the longitudinal axis (A-A), wherein the attachment device is located substantially at the opposite longitudinal end (7) of the body(3) to the end weight (9), and wherein the end weight (9) has a greater mass than the side weight (11).

2. A swimfeeder according to Claim 1, in which the end weight (9) and the side weight (11) are separate, distinct, weights.

3. A swimfeeder according to Claim 1 or Claim 2, in which the ratio between the mass of the end weight (9) and the mass of the side weight (11) respectively, is in the range 1.2: 1 to 9: 1.

4. A swimfeeder according to Claim 3, in which the ratio between the mass of the end weight (9) and the mass of the side weight (11) respectively, is approximately 2:1.

5. A swimfeeder according to any preceding claim, in which the centre of mass of the side weight (11) is situated no more than 50% of the length of the elongate body (3) from the end weight (9), in a direction parallel to the longitudinal axis (A-A).

6. A swimfeeder according to any preceding claim, in which the side weight (11) is shaped such that its centre of mass is closer to the end weight (9) than is the centre point of its length in a direction parallel to the longitudinal axis (A-A) of the elongate body (3) of the swimfeeder.

7. A swimfeeder according to any preceding claim, in which the elongate body (3) of the swimfeeder comprises a hollow body (3).

8. A swimfeeder according to Claim 7, in which the elongate hollow body (3) is provided with a plurality of holes (17) communicating between the interior and the exterior of the body (3).

9. A swimfeeder according to Claim 7 or Claim 8, in which the elongate hollow body (3) is substantially cylindrical, substantially conical, substantially frusto-conical, or a combination thereof.

10. A swimfeeder according to any one of Claims 7 to 9, in which the elongate hollow body (3) includes an open end (5) and a cap (9) to close the open end.

11. A swimfeeder according to Claim 10, in which the end weight (9) is the cap (9) of the elongate hollow body.

12. A swimfeeder according to Claim 10 or Claim 11, in which the cap (9) is an interference-fit or a snap-fit with the remainder of the elongate hollow body (3).

13. A swimfeeder according to any one of Claims 10 to 12, in which the cap (9) is secured to the remainder of the elongate hollow body (3) by means of a resiliently extendible part of the swimfeeder.

14. A swimfeeder according to Claim 13, in which the resiliently extendible part is a flexible cord or filament.

15. A swimfeeder according to Claim 13 or Claim 14, in which one end of the resilient part is attached to the longitudinal end (7) of the body (3) at which the attachment part is located, and the resilient part extends through the interior of the body (3) along its length such that the opposite end of the resilient part is attached to the cap (3).

16. A swimfeeder according to Claim 15, in which the cap (9) includes an aperture (21) into which the resilient part extends, the aperture (21) including a recess (23) in an exterior surface of the cap (9), which recess accommodates a knot or other protrusion by which the resilient part is secured to the cap.

17. A swimfeeder according to any one of Claims 10 to 16, in which the cap (9) provides a generally smooth convex exterior surface at the first longitudinal end of the elongate body (9).

18. A swimfeeder according to any preceding claim, in which the side weight (11) is attached to the remainder of the elongate body in a recess (15) provided in the exterior surface of the body (3).

## Patentansprüche

1. Futterkorb (1), der einen länglichen Körper (3) zur Aufnahme von Köder und eine Anbringungsvorrichtung zum Anbringen des Futterkorbs an einer Schnur umfasst, wobei der Körper (3) eine Längsachse (A-A) hat und ein Endgewicht (11), das sich im Wesentlichen an einem ersten longitudinalen (5) Ende des Körpers befindet, und ein Seitengewicht, das von der Längsachse (A-A) beabstandet positioniert ist, aufweist, wobei die Anbringungsvorrichtung sich im Wesentlichen am dem Endgewicht (9) entgegengesetzten longitudinalen Ende (7) des Körpers (3) befindet und wobei das Endgewicht (9) eine größere Masse als das Seitengewicht (11) hat.

2. Futterkorb nach Anspruch 1, bei dem das Endgewicht (9) und das Seitengewicht (11) separate, verschiedene Gewichte sind.

3. Futterkorb nach Anspruch 1 oder Anspruch 2, bei dem das Verhältnis zwischen der Masse des Endgewichts (9) und der Masse des Seitengewichts (11) im Bereich von 1,2:1 bis 9:1 liegt.

4. Futterkorb nach Anspruch 3, bei dem das Verhältnis zwischen der Masse des Endgewichts (9) und der Masse des Seitengewichts (11) ungefähr 2:1 beträgt.

5. Futterkorb nach einem der vorhergehenden Ansprüche, bei dem sich der Massenschwerpunkt des Seitengewichts (11) in einer zur Längsachse (A-A) parallelen Richtung höchstens 50 % der Länge des länglichen Körpers (3) von dem Endgewicht (9) entfernt befindet.

6. Futterkorb nach einem der vorhergehenden Ansprüche, bei dem das Seitengewicht (11) so gestaltet ist, dass sein Massenschwerpunkt näher an dem Endgewicht (9) liegt als der Massenschwerpunkt seiner Länge in einer zur Längsachse (A-A) des länglichen Körpers (3) des Futterkorbs parallelen Richtung.

7. Futterkorb nach einem der vorhergehenden Ansprüche, bei dem der längliche Körper (3) des Futterkorbs einen Hohlkörper (3) umfasst.

8. Futterkorb nach Anspruch 7, bei dem der längliche Hohlkörper (3) mit mehreren Löchern (17) versehen ist, die eine Verbindung zwischen dem Inneren und dem Äußeren des Körpers (3) herstellen.

9. Futterkorb nach Anspruch 7 oder Anspruch 8, bei dem der längliche Hohlkörper (3) im Wesentlichen zylindrisch, im Wesentlichen kegelig, im Wesentlichen kegelstumpfförmig oder eine Kombination davon ist.

10. Futterkorb nach einem der Ansprüche 7 bis 9, bei dem der längliche Hohlkörper (3) ein offenes Ende (5) und eine Kappe (9) zum Schließen des offenen Endes hat.

11. Futterkorb nach Anspruch 10, bei dem das Endgewicht (9) die Kappe (9) des länglichen Hohlkörpers ist.

12. Futterkorb nach Anspruch 10 oder Anspruch 11, bei dem die Kappe (9) mit dem Rest des länglichen Hohlkörpers (3) Presspassung hat oder auf ihn aufgeschnappt ist.

13. Futterkorb nach einem der Ansprüche 10 bis 12, bei dem die Kappe (9) durch einen federnd ausziehbaren Teil des Futterkorbs am Rest des länglichen Hohlkörpers (3) befestigt ist.

14. Futterkorb nach Anspruch 13, bei dem der federnd ausziehbare Teil eine flexible Schnur oder ein flexibler Faden ist.

15. Futterkorb nach Anspruch 13 oder Anspruch 14, bei dem ein Ende des federnden Teils an dem Längsende (7) des Körpers (3) angebracht ist, an welchem sich der Anbringungsteil befindet, und der federnde Teil durch das Innere des Körpers (3) entlang seiner Länge verläuft, so dass das entgegengesetzte Ende des federnden Teils an der Kappe (3) angebracht ist.

16. Futterkorb nach Anspruch 15, bei dem die Kappe (9) eine Öffnung (21) aufweist, in welche sich der federnde Teil erstreckt, wobei die Öffnung (21) eine Ausnehmung (23) in einer Außenfläche der Kappe (9) aufweist, wobei diese Ausnehmung (23) einen Knoten oder anderen Vorsprung aufnimmt, mit dem der federnde Teil an der Kappe befestigt ist.

17. Futterkorb nach einem der Ansprüche 10 bis 16, bei dem die Kappe (9) am ersten longitudinalen Ende des länglichen Körpers (9) eine allgemein glatte konvexe Außenfläche bereitstellt.

18. Futterkorb nach einem der vorhergehenden Ansprüche, bei dem das Seitengewicht (11) am Rest des länglichen Körpers in einer Ausnehmung (15) angebracht ist, die in der Außenfläche des Körpers (3) bereitgestellt ist.

## Revendications

1. Swimfeeder (1) comprenant un corps allongé (3) pour contenir l'appât, et un dispositif de fixation pour attacher le swimfeeder à une ligne, le corps (3) ayant un axe longitudinal (A-A) et comprenant un poids d'extrémité (11) sensiblement placé à une première extrémité longitudinale (5) du corps, et un poids latéral placé à l'écart de l'axe longitudinal (A-A), dans lequel le dispositif de fixation est sensiblement placé à l'extrémité longitudinale (7) du corps (3) opposée au poids d'extrémité (9), et dans lequel le poids d'extrémité (9) a une masse supérieure à celle du poids latéral (11).

2. Swimfeeder selon la revendication 1, dans lequel le poids d'extrémité (9) et le poids latéral (11) sont des poids séparés et distincts.

3. Swimfeeder selon la revendication 1 ou la revendication 2, dans lequel le rapport entre la masse du poids d'extrémité (9) et la masse du poids latéral (11) respectivement se situe dans la plage de 1,2:1 à 9:1.

4. Swimfeeder selon la revendication 3, dans lequel le rapport entre la masse du poids d'extrémité (9) et la masse du poids latéral (11) respectivement égale environ 2:1.

5. Swimfeeder selon l'une quelconque des revendications précédentes, dans lequel le centre de la masse du poids latéral (11) est situé à 50% maximum de la longueur du corps allongé (3), depuis le poids d'extrémité (9), dans une direction parallèle à l'axe longitudinal (A-A).

6. Swimfeeder selon l'une quelconque des revendications précédentes, dans lequel le poids latéral (11) a une forme telle que le centre de sa masse est plus proche du poids d'extrémité (9) que le point milieu de sa longueur dans une direction parallèle à l'axe longitudinal (A-A) du corps allongé (3) du swimfeeder.

7. Swimfeeder selon l'une quelconque des revendications précédentes, dans lequel le corps allongé (3) du swimfeeder comprend un corps creux (3).

8. Swimfeeder selon la revendication 7, dans lequel le corps allongé creux (3) est pourvu d'une pluralité de trous (17) qui font communiquer l'intérieur et l'extérieur du corps (3).

9. Swimfeeder selon la revendication 7 ou la revendication 8, dans lequel le corps allongé creux (3) est sensiblement cylindrique, sensiblement conique, sensiblement frustoconique, ou une combinaison de ces formes.

10. Swimfeeder selon l'une quelconque des revendications 7 à 9, dans lequel le corps allongé creux (3) comprend une extrémité ouverte (5) et un embout (9) qui ferme l'extrémité ouverte.

11. Swimfeeder selon la revendication 10, dans lequel le poids d'extrémité (9) est l'embout (9) du corps allongé creux.

12. Swimfeeder selon la revendication 10 ou la revendication 11, dans lequel l'embout (9) est adapté au reste du corps allongé creux (3) par ajustement serré ou encliquetage.

13. Swimfeeder selon l'une quelconque des revendications 10 à 12, dans lequel l'embout (9) est fixé au reste du corps allongé creux (3) au moyen d'une partie élastiquement extensible du swimfeeder.

14. Swimfeeder selon la revendication 13, dans lequel la partie élastiquement extensible est un cordon ou filament flexible.

15. Swimfeeder selon la revendication 13 ou la revendication 14, dans lequel une extrémité de la partie élastique est attachée à l'extrémité longitudinale (7) du corps (3) à laquelle se trouve la partie de fixation, et la partie élastique se prolonge dans l'intérieur du corps (3), le long de sa longueur, de sorte que l'extrémité opposée de la partie élastique est attachée à l'embout (3).

16. Swimfeeder selon la revendication 15, dans lequel l'embout (9) comprend une ouverture (21) dans laquelle s'étend la partie élastique, l'ouverture (21) comprenant un évidement (23) prévu dans une surface extérieure de l'embout (9), ledit évidement recevant un noeud ou autre saillie par laquelle la partie élastique est retenue sur l'embout.

17. Swimfeeder selon l'une quelconque des revendications 10 à 16, dans lequel l'embout (9) produit une surface extérieure convexe sensiblement lisse au niveau de la première extrémité longitudinale du corps allongé (9).

18. Swimfeeder selon l'une quelconque des revendications précédentes, dans lequel le poids latéral (11) est attaché au reste du corps allongé dans un évidement (15) prévu dans la surface extérieure du corps (3).
